# FASCICULE DE BREVET EUROPEEN

(11) **EP 0 893 048 B1**
(45) Date de publication et mention de la délivrance du brevet: **24.04.2002**
(21) Numéro de dépôt: 98420129.3
(22) Date de dépôt: 22.07.1998
(51) Int. Cl.: A01D 34/73

(54) **Fil de coupe à dégradabilité améliorée pour débroussailleuses et taille-bordures**
Fadenschneider mit verbesserter Degradierung für Buschmäher und Kantentrimmer
Cutting wire with improved degradation for brush cutters and edge trimmers

(30) Priorité: 23.07.1997 FR 9709608
(43) Date de publication de la demande: 27.01.1999
(73) Titulaire: SPEED FRANCE, 69658 Arnas (FR)
(72) Inventeur: Legrand, Emmanuel, 01480 Villeneuve (FR)
(74) Mandataire: Bratel, Gérard

(56) Documents cités:
- WO-A-95/06402
- US-A- 4 223 441
- PATENT ABSTRACTS OF JAPAN vol. 018, no. 242 (C-1197), 10 mai 1994 & JP 06 030627 A (KOMATSU ZENOAH CO), 8 février 1994
- PATENT ABSTRACTS OF JAPAN vol. 018, no. 150 (C-1179), 14 mars 1994 & JP 05 328821 A (MARUYAMA MFG CO LTD), 14 décembre 1993

## Description

La présente invention concerne les fils de coupe selon le préambule de la revendication 1 destinés à tailler et couper la végétation, utilisables sur des appareils de motoculture à tête rotative communément appelés débroussailleuses et taille-bordures.

Ces appareils sont équipés généralement d'un moteur thermique ou électrique qui entraîne en rotation, à une vitesse élevée pouvant être comprise entre environ 3000 tours/minute et 12000 tours/minute, une tête tournante supportant un ou plusieurs fils de coupe. Au cours de la rotation de la tête, et sous l'effet de la force centrifuge, le ou les fils de coupe se déploient radialement et balayent ainsi une certaine zone circulaire, à l'intérieur de laquelle ils exercent un effet tranchant sur la végétation rencontrée.

Les fils de coupe couramment fabriqués et commercialisés, destinés à une telle utilisation, sont des monofilaments extérieurement lisses, le plus souvent du type "monomatière", qui ont par conséquent les qualités et les faiblesses de la matière première utilisée pour les réaliser.

Les matières premières les plus fréquemment utilisées pour la réalisation des fils de coupe sont des matières synthétiques, et plus particulièrement le polyamide 6, le copolyamide 6/66 et le copolyamide 6/12. Ces matières peuvent être très légèrement modifiées ou chargées, pour améliorer leurs caractéristiques de base. Ces matières sont habituellement extrudées sous forme de monofilaments pouvant avoir des diamètres et des sections variées, en particulier une section ronde, mais aussi des profils polygonaux ou en étoile.

Les fils de coupe actuellement fabriqués constituent des bons compromis, mais leurs caractéristiques, performances et autres qualités restent limitées par les propriétés des matières premières utilisées pour leur fabrication. Ces fils de coupe conservent ainsi, malgré leurs qualités, certains défauts ou insuffisances.

En particulier, les fils de coupe traditionnels en polyamide ne sont pratiquement pas dégradables dans l'environnement, après utilisation. Certes, les rayons ultraviolets parviennent à endommager la surface extérieure de ces fils, de même que l'humidité et l'oxygène contenus dans l'air, mais il s'agit d'un processus de dégradation extrêmement lent, se propageant couche par couche depuis l'extérieur du fil vers l'intérieur de celui-ci.

L'on estime ainsi à environ 10000 tonnes la quantité de fil de coupe, fragmenté et effrité, qui est dispersée chaque année sur l'ensemble de la Terre, et qui ne se détruit que très lentement. Un certain nombre de dispositions européennes en matières de protection de l'environnement visent à limiter la pollution résultant de la casse, de l'effritement ou de la fragmentation des monofilaments synthétiques, pendant leur utilisation, mais les fils actuels ne sont pas encore de nature à satisfaire ces exigences réglementaires.

En l'état actuel des connaissances, on ne connaît pas de matière permettant à elle seule de réaliser des fils de coupe plus rapidement dégradables, de manière à satisfaire les prescriptions réglementaires, tout en conservant les qualités de base nécessaires à la fonction principale de ces fils, à savoir la coupe de la végétation.

Par ailleurs, on connaît déjà des fils de coupe à structure composite, composés d'une âme centrale et d'un enrobage extérieur, mais qui ne possèdent pas les qualités de dégradabilité ici souhaitées.

Ainsi, le document JP 06 030627 A décrit un fil de coupe pourvu de fibres de renforcement, noyées dans un matériau flexible résistant à l'abrasion. Les fibres de renforcement sont en polyester, matière qui ne possède pas de qualités particulières de biodégradabilité ou photodégradabilité. Ainsi, un fil de coupe selon ce document ne peut certainement pas être détruit à 100%.

Le document JP 05 328821 A concerne un fil de coupe incluant des filaments dégradables, sous forme de fibres naturelles telles que coton ou chanvre, donc des fibres végétales. Ces filaments sont enrobés dans un liant lui aussi en matière naturelle. Il s'agit ainsi d'un fil de coupe entièrement en matières naturelles, notamment végétales, donc de composition très différente de celle des fils de coupe actuellement courants, en matières synthétiques. La composition végétale de ce fil de coupe le rend trop rapidement dégradable, avec un risque de destruction précoce, avant utilisation. De plus, un tel fil ne possède pas les qualités mécaniques, notamment de résistance à l'abrasion, procurées par un fil de coupe synthétique.

Le document WO 9506402 A (figure 7b) montre un fil fabriqué par coextrusion, mais réalisé en polyamide qui se dégrade très mal.

Le document US 4 223 441 A décrit un fil de coupe avec filaments métalliques, par exemple en fer ou en acier, enveloppés dans une gaine en matière synthétique. Une telle composition de fil, partiellement métallique, n'est pas de nature à posséder des qualités de biodégradabilité ou photodégradabilité. Eventuellement, les fragments des filaments métalliques pourraient être détruits par oxydation, mais il s'agit là d'un phénomène d'une tout autre nature (dégradation chimique), au demeurant incertain et très lent, notamment en cas d'utilisation d'acier "inoxydable" comme le préconise ce document. De plus, la gaine extérieure ne participe pas à la coupe, mais elle se détruit rapidement pour libérer les filaments internes, ce qui signifie que la gaine possède de faibles qualités de résistance mécanique. Enfin, l'utilisation d'un tel fil de coupe est particulièrement dangereuse, et d'ailleurs interdite à l'heure actuelle, compte tenu du risque de projection de particules métalliques pouvant atteindre l'oeil de l'opérateur ou d'une autre personne.

La présente invention vise à résoudre les difficultés et insuffisances précédemment exposées, en fournissant un fil de coupe amélioré, qui soit en particulier destructible assez rapidement par biodégradation et/ou photodégradation, tout en conservant des caractéristiques notamment mécaniques lui permettant de remplir efficacement son rôle de fil de coupe.

A cet effet, l'invention résoud ce problème avec un fil de coupe montrant les caractéristiques de la revendication 1.

Ainsi, l'invention résoud le problème de la dégradation du fil de coupe en lui donnant une structure composite particulière, résultant d'une âme centrale et d'un enrobage extérieur ou "peau", en matériaux appropriés.

L'enrobage extérieur, notamment en polyamide ou en polyuréthane, permet d'obtenir un fil de coupe efficace et fiable, qui possède en particulier une excellente résistance aux chocs, à l'abrasion et à la rupture, en évitant le risque de "casse à l'oeillet" bien connu dans le domaine des débroussailleuses à tête rotative.

Quant à l'âme dégradable, celle-ci intervient de plusieurs manières :
- Etant située à l'intérieur du fil de coupe, et n'occupant qu'une fraction de la section de ce fil, l'âme n'altère pas les propriétés mécaniques du fil recherchées pour son utilisation, et notamment ses qualités de coupe, déterminées uniquement par la matière formant la surface extérieure dudit fil.
- Après utilisation du fil de coupe, les fragments de ce fil dispersés sur le sol commencent à se détruire, notamment "par l'intérieur", l'âme dégradable disparaissant assez rapidement.
- Une fois l'âme détruite, un canal intérieur est formé dans le restant du fil de coupe, et la matière d'enrobage du fil, telle que polyamide ou polyuréthane, est attaquée à la fois par l'extérieur et par l'intérieur (l'oxygène et l'humidité de l'air pénétrant dans le canal intérieur), donc assez rapidement.
- Le fait que l'âme dégradable occupe une fraction de la section du fil de coupe implique aussi une diminution de la quantité de matière, telle que polyamide, plus difficilement dégradable.

L'âme est avantageusement réalisable en une résine synthétique biodégradable, pure ou mélangée à d'autres matières synthétiques. A titre d'exemple, on peut ici utiliser une résine biodégradable à base de polycaprolactone, telle que celle commercialisée par UNION CARBIDE sous le dénomination TONE POLYMERS (marque enregistrée).

En variante, l'âme est réalisable en une matière photodégradable, par exemple en oxyde de titane rutile ou anatase, ou encore en stéarate de cérium, très sensibles aux rayons ultraviolets, mélangés comme charge avec une matière synthétique. D'autres produits élastomériques à mauvais comportement aux rayons ultra-violets, utilisés purs ou mélangés, peuvent aussi être envisagés.

On notera que, dans le cas d'une âme en matière photodégradable, la matière d'enrobage telle que polyamide ou polyuréthane doit être aussi transparente que possible, de telle sorte que la lumière ambiante atteigne pleinement l'âme afin de la détruire le plus rapidement possible. Bien entendu, dans le cas d'une âme en matière biodégradable, la matière d'enrobage peut être opaque ou colorée, sans inconvénients.

Le fil de coupe à dégradabilité améliorée, objet de l'invention, peut être fabriqué économiquement par coextrusion de l'âme centrale dégradable et de la matière d'enrobage, les matières respectives de l'âme et de l'enrobage devant être compatibles au moment de la fabrication. Le rapport des sections de l'âme et de la matière d'enrobage peut varier, et doit être défini de manière à permettre une dégradation suffisamment rapide du fil de coupe, tout en lui conservant de bonnes propriétés mécaniques.

L'âme dégradable peut posséder divers profils. Ainsi, elle peut présenter une section ronde, qui est la forme la plus simple, mais elle peut aussi posséder un profil en étoile ou dentelé, ce qui a un triple avantage :
- D'une part, une telle section augmente la surface d'adhésion de l'enrobage sur l'âme, et améliore ainsi l'accrochage de l'enrobage sur l'âme.
- D'autre part, une âme de section dentelée ou étoilée peut posséder une surface de contact augmentée avec les rayons ultraviolets, pour une même quantité de matière, d'où une photodégradation plus rapide de ladite âme.
- Enfin, après destruction d'une telle âme, on obtient un canal intérieur à paroi plus étendue, donc offrant une surface d'attaque intérieure plus importante pour le matière d'enrobage, entraînant aussi une destruction plus rapide de cette matière.

En variante, au lieu d'une âme unique, le fil de coupe objet de l'invention peut posséder deux ou plusieurs parties internes en matière dégradable, se présentant par exemple comme des filaments parallèles noyés dans la même matière d'enrobage, ce qui est aussi de nature à augmenter la surface d'attaque intérieure de la matière d'enrobage, et à mieux répartir cette attaque dans ladite matière d'enrobage.

Grâce aux dispositions prévues par l'invention, il est possible d'obtenir un fil de coupe satisfaisant aux exigences réglementaires en termes de dégradation, à savoir un fil ayant perdu 50% de ses caractéristiques mécaniques après deux ans.

L'invention sera de toute façon mieux comprise à l'aide de la description qui suit, en référence au dessin schématique annexé représentant, à titre d'exemples, deux formes de réalisation de ce fil de coupe à dégradabilité améliorée pour débroussailleuses et taille-bordures :
Figure 1 est une vue en perspective d'un tronçon de fil de coupe conforme à la présente invention, avec âme de section ronde ;
Figure 2 est une vue en perspective d'un autre tronçon de fil de coupe conforme à la présente invention, avec âme de section étoilée.

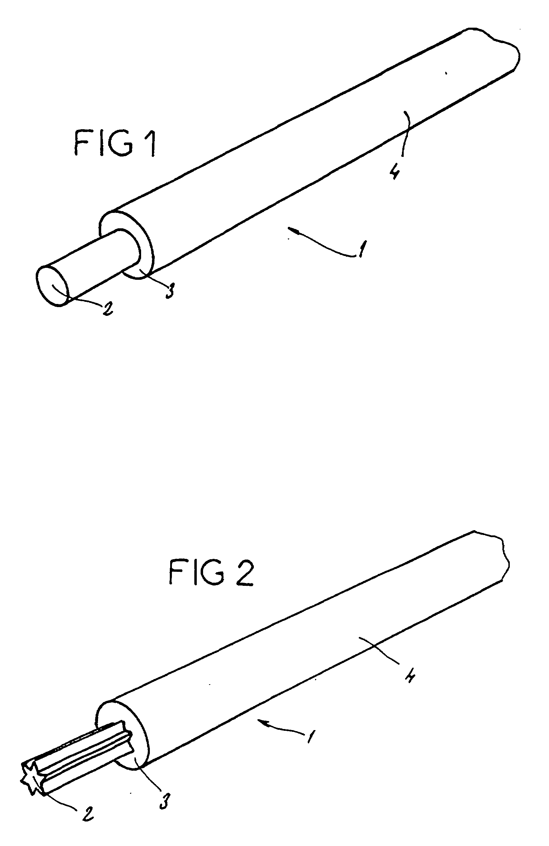

La figure 1 montre un court tronçon d'un fil de coupe 1, pour débroussailleuses ou taille-bordures, en faisant apparaître la section de ce fil. Le fil de coupe 1 se compose d'un fil d'âme 2, ici de section ronde, qui est enrobé de toutes parts d'un revêtement ou "peau" 3, dont la section en couronne possède un contour extérieur aussi de forme ronde.

La matière d'enrobage, constituant le revêtement ou "peau" 3, est notamment du polyamide ou du polyuréthane, conférant au fil de coupe 1 les propriétés de résistance aux chocs, à l'abrasion et à la rupture, recherchées pour son utilisation. Cette matière synthétique forme notamment la surface extérieure lisse 4 du fil de coupe 1.

L'âme 2 du fil de coupe 1 est constituée par une matière biodégradable et/ou photodégradable.

Ce fil de coupe 1 est obtenu, en une seule opération, par coextrusion du fil d'âme 2 et de la "peau" 3.

La figure 2 montre un court tronçon d'un autre fil de coupe 1, dans lequel le fil d'âme 2, toujours en matière biodégradable et/ou photodégradable, possède une section étoilée, offrant une surface de contact et d'adhésion plus importante avec la matière d'enrobage, formant la "peau" 3.

Dans tous les cas, après utilisation du fil de coupe 1, le fil d'âme 2 subit une dégradation relativement rapide, sa destruction s'accompagnant de la formation d'un canal ou d'une cavité interne. Dans le cas d'un fil d'âme 2 en matière photodégradable, la "peau" 3 est réalisée dans une matière synthétique transparente, de manière à permettre à la lumière, et notamment aux rayons ultraviolets, d'atteindre le fil d'âme 2 sur toute sa longueur.

L'on ne s'éloignerait pas du cadre de l'invention en modifiant le rapport des diamètres de l'âme dégradable 2 et de la "peau" 3, ou en donnant à la section de l'âme 2 et/ou de la "peau" 3 des contours autres que ceux illustrés, ou encore en réalisant l'âme 2 et la "peau" 3 dans des matières autres que celles mentionnées, mais compatibles entre elles et conservant les propriétés recherchées.

## Revendications

1. Fil de coupe pour débroussailleuses et taille-bordures, à tête rotative, comprenant une partie interne ou âme (2), simple ou multiple, **caractérisé en ce que** ladite partie interne ou âme est en matière biodégradable et/ou photodégradable, qui est enrobée d'une matière synthétique (3) telle que polyamide ou polyuréthane, formant notamment la surface extérieure (4) du fil de coupe (1).

2. Fil de coupe selon la revendication 1, **caractérisé en ce que** l'âme (2) est réalisée en résine synthétique biodégradable, pure ou mélangée à d'autres matières synthétiques.

3. Fil de coupe selon la revendication 2, **caractérisé en ce que** l'âme (2) est réalisée en résine biodégradable à base de polycaprolactone.

4. Fil de coupe selon la revendication 1, **caractérisé en ce que** l'âme (2) est réalisée en une matière photodégradable, telle qu'oxyde de titane rutile ou anatase, ou stéarate de cérium, mélangée comme charge avec une matière synthétique.

5. Fil de coupe selon la revendication 1 ou 4, **caractérisé en ce que**, dans le cas d'une âme (2) en matière photodégradable, la matière d'enrobage (3) telle que polyamide ou polyuréthane est transparente.

6. Fil de coupe selon l'une quelconque des revendications 1 à 5, **caractérisé en ce que** l'âme dégradable (2) présente une section ronde.

7. Fil de coupe selon l'une quelconque des revendications 1 à 5, **caractérisé en ce que** l'âme dégradable (2) possède un profil en étoile ou dentelé.

8. Fil de coupe selon l'une quelconque des revendications 1 à 7, **caractérisé en ce qu'**il possède deux ou plusieurs parties internes (2) en matière dégradable, se présentant comme des filaments parallèles noyés dans la même matière d'enrobage (3).

9. Fil de coupe selon l'une quelconque de revendications 1 à 8, **caractérisé en ce qu'**il est fabriqué par coextrusion de l'âme centrale dégradable (2) et de la matière d'enrobage (3).

## Patentansprüche

1. Schneidfaden für Freischneidegeräte und Kantentrimmer mit Drehkopf, der durch einen einfachen oder mehrteiligen inneren Teil oder Kern (2) gebildet ist, **dadurch gekennzeichnet, dass** dieser innere Teil oder Kern biologisch und/oder photochemisch abbaubar ist, der mit einem Kunststoff (3) wie etwa Polyamid oder Polyurethan umhüllt ist, welcher insbesondere die äußere Oberfläche (4) des Schneidfadens (1) bildet.

2. Schneidfaden nach Anspruch 1, **dadurch gekennzeichnet, dass** der Kern (2) aus biologisch abbaubarem Kunstharz, und zwar rein oder mit anderen Kunststoffen gemischt, hergestellt ist.

3. Schneidfaden nach Anspruch 2, **dadurch gekennzeichnet, dass** der Kern (2) aus biologisch abbaubarem Kunstharz auf der Basis von Polycaprolactam hergestellt ist.

4. Schneidfaden nach Anspruch 1, **dadurch gekennzeichnet, dass** der Kern (2) aus einem photochemisch abbaubaren Material, wie etwa Rutil- oder Anatas-Titanoxid oder Cerium-Stearat, das mit einem Kunststoff als Füllstoff gemischt ist, hergestellt ist.

5. Schneidfaden nach Anspruch 1 oder 4, **dadurch gekennzeichnet, dass** im Fall eines Kerns (2) aus photochemisch abbaubarem Material das Material der Umhüllung (3), wie etwa Polyamid oder Polyurethan, durchsichtig ist.

6. Schneidfaden nach einem der Ansprüche 1 bis 5, **dadurch gekennzeichnet, dass** der abbaubare Kern (2) einen runden Querschnitt aufweist.

7. Schneidfaden nach einem der Ansprüche 1 bis 5, **dadurch gekennzeichnet, dass** der abbaubare Kern (2) ein sternförmiges oder sägeförmiges Profil besitzt.

8. Schneidfaden nach einem der Ansprüche 1 bis 7, **dadurch gekennzeichnet, dass** er zwei oder mehrere innere Teile (2) aus abbaubarem Material besitzt, die sich wie parallele Filamente darstellen, die in demselben Umhüllungsmaterial (3) eingebettet sind.

9. Schneidfaden nach einem der Ansprüche 1 bis 8, **dadurch gekennzeichnet, dass** er durch Koextrusion des zentralen abbaubaren Kerns (2) und des Umhüllungsmaterials (3) hergestellt ist.

## Claims

1. Cutting line for brush cutters and edge trimmers, with a rotary head, comprising of a single or multiple internal part or core (2), **characterised in that** said internal part or core (2) is made of a biodegradable and/or photodegradable material, which is coated with a synthetic substance (3) such as polyamide or polyurethane which, in particular, forms the exterior surface (4) of the cutting line (1).

2. The cutting line as claimed in claim 1, **characterised in that** the core (2) is made of a biodegradable synthetic resin either pure or mixed with other synthetic substances.

3. The cutting line as claimed in claim 2, **characterised in that** the core is made of a polycaprolactone-based biodegradable resin.

4. The cutting line as claimed in claim 1, **characterised in that** the core (2) is made of a photodegradable substance, such as rutile or anatase titanium oxide, or cerium stearate, mixed as a filler with a synthetic substance.

5. The cutting line as claimed in claim 1 or 4, **characterised in that**, in the case of a core (2) made of photodegradable substance, the coating substance (3) such as polyamide or polyurethane is transparent.

6. The cutting line as claimed in any of claims 1 to 5, **characterised in that** the degradable core (2) has a round cross-section.

7. The cutting line as claimed in any of claims 1 to 5, **characterised in that** the degradable core (2) has a star-shaped or ribbed profile.

8. The cutting line as claimed in any of claims 1 to 7, **characterised in that** it has two or more internal parts (2) made of a degradable substance, in the form of parallel filaments, embedded in the same coating substance (3).

9. The cutting line as claimed in any of claims 1 to 8, **characterised in that** it is manufactured by coextruding the degradable central core (2) and the coating substance (3).
